(19) Europäisches Patentamt
European Patent Office
Office européen des brevets

(11) **EP 2 894 857 A1**

(12) **EUROPEAN PATENT APPLICATION**

(43) Date of publication:
**15.07.2015 Bulletin 2015/29**

(51) Int Cl.:
**H04N 19/19** (2014.01)   **H04N 19/30** (2014.01)
**H04N 19/176** (2014.01)   **H04N 19/147** (2014.01)
**H04N 19/103** (2014.01)

(21) Application number: **14305042.5**

(22) Date of filing: **10.01.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Leleannec, Fabrice
35576 Cesson Sévigné (FR)**
• **Lasserre, Sébastien
35576 Cesson Sévigné (FR)**
• **Touze, David
35576 Cesson Sévigné (FR)**

(74) Representative: **Huchet, Anne et al
Technicolor
1, rue Jeanne d'Arc
92443 Issy-les-Moulineaux Cedex (FR)**

(54) **Method and apparatus for encoding image data and method and apparatus for decoding image data**

(57)    A method and device for encoding at least part of an image of high dynamic range defined in a perceptual space having a luminance component and a color difference metric, the method comprising: encoding a segment of the at least part of the image using a encoding process applicable to a low dynamic range (LDR) image by applying a coding parameter set including at least one coding parameter; reconstructing the encoded segment in the perceptual space of high dynamic range; evaluating a rate distortion cost for the encoded segment in the perceptual space of high dynamic range; and adjusting said coding parameter set for the encoding process of the segment based on the evaluated rate distortion cost. A corresponding decoding device and method is also provided.

FIG. 1

**Description**

TECHNICAL FIELD

The present invention relates to a method and an apparatus for encoding image data, and a method and an apparatus for decoding image data. Particularly, but not exclusively, the invention relates to encoding and decoding of video data for High Dynamic Range (HDR) applications.

BACKGROUND

The variation of light in a scene captured by an imaging device can vary greatly. For example, objects located in a shadow of the scene can appear very dark compared to an object illuminated by direct sunlight. The limited dynamic range and colour gamut provided by traditional low dynamic range (LDR) images do not provide a sufficient range for accurate reproduction of the changes in luminance and colour within such scenes. Typically the values of components of LDR images representing the luminance or colour of pixels of the image are represented by a limited number of bits (typically 8, 10 or 12 bits). The limited range of luminance provided by such representation does not enable small signal variations to be effectively reproduced, in particular in bright and dark ranges of luminance.

High dynamic range imaging (also referred to as HDR or HDRI) enables a greater dynamic range of luminance between light and dark areas of a scene compared to traditional LDR images. This is achieved in HDR imaging by extending the signal representation to a wider dynamic range in order to provide high signal accuracy across the entire range. In HDR images, component values of pixels are usually represented with a greater number of bits (for example from 16 bits to 64 bits) including in floating-point format (for example 32-bit or 16-bit for each component, namely float or half-float), the most popular format being openEXR half-float format (16-bit per RGB component, i.e. 48 bits per pixel) or in integers with a long representation, typically at least 16 bits. Such ranges correspond to the natural sensitivity of the human visual system. In this way HDR images more accurately represent the wide range of luminance found in real scenes thereby providing more realistic representations of the scene.

Because of the greater range of values provided, however, HDR images consume large amounts of storage space and bandwidth, making storage and transmission of HDR images and videos problematic. Efficient coding techniques are therefore required in order to compress the data into smaller, more manageable data sizes. Finding suitable coding/decoding techniques to effectively compress HDR data while preserving the dynamic range of luminance for accurate rendering has proved challenging.

A typical approach for encoding an HDR image is to reduce the dynamic range of the image in order to encode the image by means of a traditional encoding scheme used to encode LDR images.

For example in one such technique, a tone-mapping operator is applied to the input HDR image and the tone-mapped image is then encoded by means of a conventional 8-10 bit depth encoding scheme such as JPEG/JPEG200 or MPEG-2, H.264/AVC for video (Karsten Suhring, H.264/AVC Reference Software, http://iphome.hhi.de/suehring/tml/download/, the book of I. E. Richardson titled « H.264 and MPEG-4 video compression » published in J. Wiley & Sons in September 2003). An inverse tone-mapping operator is then applied to the decoded image and a residual is calculated between the input image and the decoded and inverse-tone-mapped image. Finally, the residual is encoded by means of a second traditional 8-10 bit-depth encoder scheme.

The main drawbacks of this first approach are the use of two encoding schemes and the limitation of the dynamic range of the input image to twice the dynamic range of a traditional encoding scheme (16-20 bits). According to another approach, an input HDR image is converted in order to obtain a visually lossless representation of the image pixels in a colour space in which values belong to a dynamic range which is compatible with a traditional 8-10 or an extended 12, 14 or 16 bits depth encoding scheme such as HEVC for example (B. Bross, W.J. Han, G. J. Sullivan, J.R. Ohm, T. Wiegand JCTVC-K1003, "High Efficiency Video Coding (HEVC) text specification draft 9," Oct 2012) and its high bit-depth extensions. Even if traditional codecs can operate high pixel (bit) depths it is generally difficult to encode at such bit depths in a uniform manner throughout the image because the ratio of compression obtained is too low for transmission applications.

Other approaches using coding techniques applicable to LDR images result in artifacts in the decoded image. The present invention has been devised with the foregoing in mind.

SUMMARY

According to a first aspect of the invention, there is provided a method of encoding at least part of an image of high dynamic range defined in a perceptual space having a luminance component and a color difference metric, the method comprising:

encoding a segment of the at least part of the image using a encoding process applicable to a low dynamic range (LDR) image by applying a coding parameter set including at least one coding parameter;
reconstructing the encoded segment in the perceptual space of high dynamic range;
evaluating a rate distortion cost for the encoded segment in the perceptual space of high dynamic range; and
adjusting said coding parameter set for the encoding process of the segment based on the evaluated rate distortion cost.

In an embodiment the method includes obtaining for the said segment a least one common representative luminance component value based on the luminance values of the corresponding image samples of the said segment.

In an embodiment, evaluating the rate distortion cost comprises evaluating the rate associated with encoding of the at least one common representative component value.

In an embodiment, the encoding process is a HEVC type encoding process and the segment of the at least part of the image corresponds to a coding unit, a prediction unit or a transform unit

In an embodiment, the method includes representing the image segment in a local perceptual space based on the common representative luminance component value prior to encoding of the segment.

In an embodiment the method includes obtaining for the segment at least one local residual luminance component in a local LDR domain, said at least one local residual luminance component corresponding to the differential between the corresponding luminance component of the original image and the at least one common representative luminance value of the segment.

In an embodiment, the method includes obtaining for the segment at least one image portion in the local perceptual space, said at least one image portion corresponding to the local residual luminance component or the color component of the image portion, normalized according to the at least one common representative luminance value of the segment.

In an embodiment, evaluating the rate distortion cost comprises evaluating the rate associated with encoding of the said at least one image portion.

In an embodiment, evaluating the rate distortion cost comprises evaluating the rate associated with encoding of the local residual luminance component.

In an embodiment, evaluating the rate distortion cost comprises evaluating the distortion associated with reconstruction of the encoded segment in the perceptual space of high dynamic range.

In an embodiment, the rate distortion cost $D^{HDR}$ for a coding parameter set p is evaluated based on the following expression :

$$D^{HDR}(CU,p) + \lambda\big(R_{LDR}(CU,p) + R(L_{lf},p)\big)$$

where:

- $R_{LDR}$ ($Cu$, $p$) is the rate associated with encoding of the residual image portion $R(L_{lf}, p)$ is the rate associated with encoding of the common representative luminance component value

$D^{HDR}(CU, p)$ is the distortion associated with distortion associated with reconstruction of the encoded segment in the perceptual space of high dynamic range.

$\lambda$ is a Lagrange parameter

In an embodiment, the method includes performing virtual lossless refinement between samples of the residual image portion reconstructed in the local perceptual space and samples of the original texture and the corresponding samples of the said image.

According to a second aspect of the invention there is provided an encoding device for encoding at least part of an image of high dynamic range defined in a perceptual space having a luminance component and a color difference metric, the device comprising:

an encoder (ENC1, ENC2, ENC3) for encoding a segment of the at least part of the image using a encoding process applicable to a low dynamic range (LDR) image by applying a coding parameter set including at least one coding parameter;
a reconstruction module (REC) reconstructing the encoded segment in the perceptual space of high dynamic range;
a rate-distortion module (RATE-DIST) for determining a rate distortion cost for the encoded segment in the perceptual space of high dynamic range; and

an encoder management module (ENCODER CONTROL) for adjusting said coding parameter set for the encoding process of the segment based on the evaluated rate distortion cost.

In an embodiment the encoding device includes a module for obtaining for the said segment a least one common representative luminance component value based on the luminance values of the corresponding image samples of the said segment.

In an embodiment, the rate distortion module is configured to evaluate the rate associated with encoding of the at least one common representative component value.

In an embodiment, the encoding device is configured to implement a HEVC type encoding process and the segment of the at least part of the image corresponds to a coding unit, a prediction unit or a transform unit

In an embodiment, the encoding device comprise a module for representing the image segment in a local perceptual space based on the common representative luminance component value prior to encoding of the segment.

In an embodiment the encoding device comprise a module for obtaining for the segment at least one local residual luminance component in a local LDR domain, said at least one local residual luminance component corresponding to the differential between the corresponding luminance component of the original image and the at least one common representative luminance value of the segment.

In an embodiment, the encoding device comprise a module for obtaining for the segment at least one image portion in the local perceptual space, said at least one image portion corresponding to the local residual luminance component or the color component of the image portion, normalized according to the at least one common representative luminance value of the segment.

In an embodiment, the rate distortion module is configured to evaluate the rate associated with encoding of the residual image portion.

In an embodiment, the rate distortion module is configured to evaluate the distortion associated with reconstruction of the encoded segment in the perceptual space of high dynamic range.

In an embodiment, the rate distortion cost $D^{HDR}$ for a coding parameter set p is evaluated based on the following expression :

$$D^{HDR}(CU,p) + \lambda\big(R_{LDR}(CU,p) + R(L_{lf},p)\big)$$

where:

- $R_{LDR}$ $(Cu, p)$ is the rate associated with encoding of the residual image portion $R(L_{lf}, p)$ is the rate associated with encoding of the common representative luminance component value

$D^{HDR}(CU, p)$ is the distortion associated with distortion associated with reconstruction of the encoded segment in the perceptual space of high dynamic range.

$\lambda$ is a Lagrange parameter

In an embodiment, the encoding device comprise a module for performing virtual lossless refinement between samples of the residual image portion reconstructed in the local perceptual space and samples of the original texture and the corresponding samples of the said image.

According to a third aspect of the invention there is provided a decoding method for decoding a bit-stream representative of at least part of an image of high dynamic range defined in a perceptual space having a luminance component and a color difference metric, the method comprising:

accessing coding data representative of a coding parameter set used to encode the image, the coding parameter set including at least one coding parameter; and

decoding a segment of the at least part of the image using a decoding process applicable to a low dynamic range (LDR) image by applying a decoding parameter set corresponding to the coding parameter set;

wherein the coding parameter set is determined based on a rate distortion cost evaluated for the segment after encoding of the segment by an encoding process applicable to an LDR image and reconstruction of the segment in the perceptual space of high dynamic range.

According to a fourth aspect of the invention there is provided a decoding device for decoding a bit-stream representative of at least part of an image of high dynamic range defined in a perceptual space having a luminance component and a color difference metric, the device comprising:

an interface for accessing coding data representative of a coding parameter set used to encode the image, the coding parameter set including at least one coding parameter; and

a decoder for decoding a segment of the at least part of the image using a decoding process applicable to a low dynamic range (LDR) image by applying a decoding parameter set corresponding to the coding parameter set; wherein the coding parameter set is determined based on a rate distortion cost evaluated for the segment after encoding of the segment by an encoding process applicable to an LDR image and reconstruction of the segment in the perceptual space of high dynamic range.

According to a fifth aspect of the invention there is provided a bit-stream representative of at least part of an image of high dynamic range defined in a perceptual space having a luminance component and a color difference metric, the bitstream further comprising a signal carrying data representative of a coding parameter set wherein the coding parameter set is determined based on a rate distortion cost evaluated for the segment after encoding of the segment by an encoding process applicable to an LDR image and reconstruction of the segment in the perceptual space of high dynamic range.

The coding parameter set of the third, fourth and fifth aspect is determined in accordance with any of the embodiments of the first and second aspect of the invention.

Embodiments of the invention provide encoding and decoding methods for high dynamic range image data for a wide range of applications providing improved visual experience.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RE signal.

## BRIEF DESCRIPTION OF THE DRAWINGS

Embodiments of the invention will now be described, by way of example only, and with reference to the following drawings in which:

FIG. 1 is a block diagram of an encoding process according to a first embodiment of the invention;
FIG. 2 is a schematic diagram illustrating an example of decomposition of a coding unit into prediction units and transform units according to the HEVC video compression standard;
FIG. 3 is a block diagram of an encoding process according to an embodiment of the invention;
FIG. 4 is a block diagram of an encoding process according to a further embodiment of the invention;
FIG. 5 is a block diagram of a decoding process in accordance with one or more embodiments of the invention;
FIG. 6 is a block diagram of a communication device in which one or more embodiments of the invention can be implemented; and
FIG. 7 is a block diagram of an example of a data communication system in which one or more embodiments of the invention can be implemented;

## DETAILED DESCRIPTION

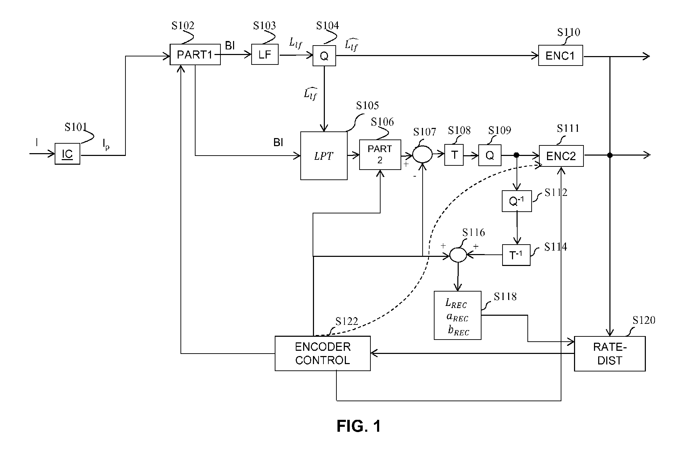

Figure 1 is a schematic block diagram illustrating steps of a method for encoding at least part of an image I in accordance with a first embodiment of the invention. Encoding steps of the method of Figure 1 are generally based on the HEVC compression standard applicable to LDR type images but it will be appreciated that embodiments of the invention may be applied to other encoding standards applicable to LDR type images such as, for example H.264/AVC, MPEG2 or MPEG4.

The method begins with the acquisition of HDR image data. The HDR image data may be representative of a video sequence of images, an image or part of an image. For the purposes of simplifying the description which follows, the acquired image data corresponds to an HDR image. The HDR image data may be acquired directly from an imaging device such as a video camera, acquired from a memory device located locally or remotely on which it is stored, or received via a wireless or wired transmission line.

As used herein the term "HDR image" refers to any HDR image that comprises high dynamic range data in floating point (float or half float), fixed point or long representation integer format typically represented in by a number of bits greater than 16. The input HDR image may be defined in any colour or perceptual space. For example, in the present embodiment the input HDR image is defined in an RGB colour space. In another embodiment the input HDR image may be defined in another colour space such as YUV or any perceptual space.

Generally, the encoding steps of the process are performed on an image including data representative of the luminance of pixels of the image. Such image data includes a luminance component L and potentially at least one colour component $C(i)$ where i is an index identifying a colour component of the image. The components of the image define a colour space, usually a 3D space, for example the image may be defined in a colour perceptual space comprising a luminance component L and potentially two colour components C1 and C2.

It will be appreciated, however, that the invention is not restricted to a HDR image having colour components. For example, the HDR image may be a grey image in a perceptual space having a luminance component without any colour component.

A perceptual space is defined as a colour space which is made of a plurality of components including a luminance component and has a colour difference metric $d((L, C1, C2), (L', C1', C2'))$ whose values are representative of, preferably proportional to, the respective differences between the visual perceptions of two points of said perceptual space. For example the colour space has a luminance component L and two colour components C1 and C2.

Mathematically speaking, the colour difference metric $d((L, C1, C2), (L', C1', C2'))$ is defined such that a perceptual threshold $\Delta E_0$ (also referred to as JND, Just Noticeable Difference) exists, below which a human eye is unable to perceive a visual difference between two colours of the perceptual space, i.e.

$$d\big((L, C1, C2), (L', C1', C2')\big) < \Delta E_0, \qquad (1)$$

The perceptual threshold $\Delta E_0$ is independent of the two points $(L, C1, C2)$ and $(L', C1', C2')$ of the perceptual space. Thus, encoding an image whose components belong to a perceptual space such that the metric of equation (1) remains below the bound $\Delta E_0$ ensures that displayed decoded version of the image is visually lossless.

When the acquired image I comprises components belonging to a non-perceptual space such as for example (R,G,B), a perceptual transform is applied in step S101 by an image conversion module IC to the image data I in order to obtain a HDR image $I_p$ having a luminance component L and potentially two colours components C1 and C2 defining a perceptual space. The perceptual transform performed depends on the lighting conditions of the display and on the initial colour space. For example, assuming the initial colour space is a (R,G,B) colour space, the image I is first transformed into the well-known linear space (X, Y, Z). This step includes performing linearization of the data, where appropriate, by applying an inverse gamma correction and then transforming the linear RGB space data into the XYZ space with a 3x3 transform matrix. For this step data characterizing the visual environment of the image is used. For example a 3D vector of values $(X_n, Y_n, Z_n)$ defining reference lighting conditions of the display in the (X,Y,Z) space is used.

As an example, a perceptual transform is defined as follows in the case where the perceptual space LabCIE1976 is selected:

$$L^* = 116 f(Y/Y_n) - 16$$

$$a^* = 500\big(f(X/X_n) - f(Y/Y_n)\big)$$

$$b^* = 200\big(f(Y/Y_n) - f(Z/Z_n)\big)$$

where f is a gamma correction function for example given by:

$$f(r) = r^{1/3} \quad if \ r > (6/29)^3$$

$$f(r) = \frac{1}{3} * \left(\frac{29}{6}\right)^2 * r + \frac{4}{29}$$

otherwise

Two colours are humanly distinguishable from one another in the reference lighting conditions ($X_n$, $Y_n$, $Z_n$) when the following colour difference metric defined on the perceptual space LabCIE1976 is satisfied:

$$d\big((L^*, a^*, b^*), (L^{*\prime}, a^{*\prime}, b^{*\prime})\big)^2 = (\Delta L^*)^2 + (\Delta a^*)^2 + (\Delta b^*)^2 < (\Delta E_0)^2$$

with $\Delta L^*$ being the difference between the luminance components of the two colours ($L^*$, $a^*$, $b^*$) and ($L^{*\prime}$, $a^{*\prime}$, $b^{*\prime}$) and $\Delta a^*$ (respectively $\Delta b^*$) being the difference between the colour components of these two colours. Typically $\Delta E_0$ has a value of between 1 and 2.

The image in the space (X,Y,Z) may, in some cases, be inverse transformed to obtain the estimate of the decoded image in the initial space such as, in the present example, (R,G,B) space. The corresponding inverse perceptual transform is given by:

$$X = X_n f^{-1}\left(\frac{1}{116}(L^* + 16) + \frac{1}{500}a^*\right)$$

$$Y = Y_n f^{-1}\big(1/116(L^* + 16)\big)$$

$$Z = Z_n f^{-1}\left(\frac{1}{116}(L^* + 16) + \frac{1}{200}b^*\right)$$

According to another example, when the perceptual space L$u^*v^*$ is selected, a perceptual transform may be defined as follows:

$$u^* = 13L(u' - u'_{white}) \text{ and } v^* = 13L(v' - v'_{white})$$

where the following are defined:

$$u' = \frac{4X}{X + 15Y + 3Z}, \ v' = \frac{9Y}{X + 15Y + 3Z},$$

and

$$u'_{white} = \frac{4X_n}{X_n + 15Y_n + 3Z_n}, \ v'_{white} = \frac{9Y_n}{X_n + 15Y_n + 3Z_n}.$$

The following Euclidean metric may be defined on the perceptual space *Lu*v**:

$$d\big((L^*, u^*, v^*), (L^{*\prime}, u^{*\prime}, v^{*\prime})\big)^2 = (\Delta L)^2 + (\Delta u^*)^2 + (\Delta v^*)^2$$

with $\Delta L^*$ being the difference between the luminance components of the two colours ($L^*$, $u^*$, $v^*$) and ($L^{*\prime}$, $u^{*\prime}$, $v^{*\prime}$), and $\Delta u^*$ (respectively $\Delta v^*$) being the difference between the colour components of these two colours.

The corresponding inverse perceptual transform for the Luv space is given by:

$$X = \frac{9Yu^\prime}{4v^\prime}$$

$$Y = Y_n f^{-1}\left(\frac{1}{116}(L^* + 16)\right)$$

$$Z = \frac{3Y(4 - u^\prime)}{4v^\prime} - 5Y$$

It will be appreciated that the present invention is not limited to the perceptual space LabCIE1976 but may be extended to any type of perceptual space such as the LabCIE1994, LabCIE2000, which are the same Lab space but with a different metric to measure the perceptual distance, or to any other Euclidean perceptual space for instance.

Other examples are LMS spaces and IPT spaces. A condition is that on these perceptual spaces the metric is defined such that it is preferably proportional to the perception difference; as a consequence, a homogeneous maximal perceptual threshold $\Delta E_0$ exists below which a human being is not able to perceive a visual difference between two colours of the perceptual space.

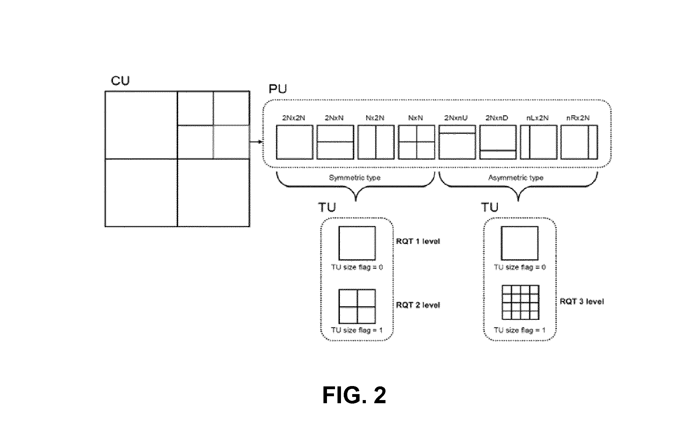

In step S102 the image is spatially decomposed into a series of spatial units, by a partitioning module PART1. An example of spatial coding structures in accordance with a HEVC video compression technique in encoding of images is illustrated in Figure 2. In the case of a HEVC type encoder the largest spatial unit is referred to as a coding tree unit (CTU). Each spatial unit is decomposed into further elements according to a decomposition configuration, indicated by coding parameters, often referred to as a quad-tree. Each leaf of the quad-tree is called a coding unit (CU), and is further partitioned into one or more sub-elements referred to as prediction units (PU) and transform units (TU).

In step S102 of the example of Figure 1 a coding unit is partitioned into one or more sub-elements or blocks BI which in the present example correspond to Prediction units (PU) for prediction based encoding in accordance with the coding parameters managed by encoder control module ENCODER CONTROL.

While in the present example the output block BI of step S102 is a PU, it will be appreciated that in other embodiments of the invention in which a HEVC type technique is applied the output of step S102 may be a CU or a TU. In other embodiments the block BI will refer to a suitable spatial region of the image being encoded.

In the present example each Prediction Unit or block BI corresponds to a square or rectangular spatial region of the image associated with respective prediction (Intra or Inter) parameters:

The ENCODER CONTROL module manages the strategy used to encode a given coding unit or sub-elements of a coding unit in a current image. To do so, it assigns candidate coding parameters to the current coding unit or coding unit sub-elements. These encoding parameters may include one or more of the following coding parameters:

- the coding tree unit organization in terms of coding quad-tree, prediction units and transform units.
- the coding mode (INTRA or INTER) assigned to coding units of the coding tree.
- the intra prediction mode (DC, planar or angular direction) for each Intra coding unit in the considered coding tree.
- the INTER prediction parameters in case of INTER coding units: motion vectors, reference picture indices, etc.

In embodiments of the invention as described herein, the rate distortion cost associated with the encoding of a current coding unit with candidate coding parameters is computed and the ENCODER CONTROL module adapts the coding parameters in accordance with the computed rate distortion cost.

The choice of coding parameters for a coding unit is performed by minimizing a rate-distortion cost as follows:

$$p_{opt} = \underset{p \in P}{\mathbf{Argmin}}\{D(p) + \lambda.R(p)\}$$

where p represents the set of candidate coding parameters for a given coding unit and λ represents the Lagrange parameter, and *D(p)* and *R(p)* respectively represent the distortion and the rate associated with the coding of the current coding unit with the candidate set of coding parameters p.

In embodiments of the invention, the distortion term D(p) represents the coding error obtained in the initial HDR perceptual space of the image to be encoded. In general this involves reconstructing a CU or CU sub-elements being processed into the original (*L\*, a\*, b\**) space, as will be described in what follows, before calculating the distortion *D(p)* associated with coding parameter p. Such an approach helps to reduce the appearance of artefacts in the decoded image since the coding unit or subelement in its original HDR space is considered.

In step S103 each prediction unit or block is attributed a luminance component value, referred to as a low spatial frequency luminance component $L_{lf}$ representative of the mean of the luminance values of the samples (a sample may comprise one or more pixels) making up that prediction unit or block. This is performed by a luminance processing module LF. Calculating a low spatial frequency luminance component basically involves down-sampling the luminance components of the original image. It will be appreciated that the invention is not limited to any specific embodiment for computing a low-spatial-frequency version for each prediction unit or block and that any low-pass filtering or down-sampling of the luminance component of the image $I_p$ may be used. In step S104 the low-spatial frequency luminance component is quantized by a quantization unit Q to provide a quantized low-spatial frequency luminance component $\hat{L}_{lf}$ = $Q(L_{lf})$. Entropy coding is performed by an entropy encoder ENC1 in step S110 on the quantized low-spatial frequency luminance component $\hat{L}_{lf}$ for the output video bitstream. Encoding of the low spatial frequency luminance component may be referred to herein as a first layer of coding or luminance layer.

Based on the respective value of the quantized low-spatial frequency luminance component $\hat{L}_{lf}$, the values of the luminance and colour components of the prediction unit or block are transformed in step S105 by a local perceptual transform unit LPT into a local perceptual space corresponding to the perceptual space transformation of step S101. This perceptual space in the present example is the perceptual space L\*a\*b\*. The quantized low spatial frequency luminance component $\hat{L}_{lf}$ is used as the reference lighting conditions of the display. The luminance and colour components of this local perceptual space L\*a\*b\* of the block are noted $\left(L^*_{local}, a^*_{local}, b^*_{local}\right)$. In practice, the transformation into the local perceptual space depends on the quantized low-spatial frequency luminance component $\hat{L}_{lf}$ and the maximum error threshold Δ*E* targeted in the encoding process in the local perceptual space.

The transformation into the local perceptual space $\left(L^*_{local}, a^*_{local}, b^*_{local}\right)$. includes the following steps. The luminance signal is first transformed into a so-called local LDR representation, through the following luminance residual computation:

$$L_r = L - \hat{L}_{lf}$$

Where $L_r$ represents the computed residual luminance component, L represents the corresponding luminance component in the original image, and $\hat{L}_{lf}$ represents the quantized low spatial frequency luminance component.

This step can be referred to herein as the LDR localization step.

Then the residual luminance component $L_r$ is represented in a local perceptual space as follows. Assuming a nominal lighting luminance $Y_n$, in the L\*a\*b\* perceptual space mode, a change in lighting conditions by a factor $Y_E$ transforms the perceptual space components as follows:

$$(X_n, Y_n, Z_n) \rightarrow (Y_E X_n,\ Y_E Y_n,\ Y_E Z_n)$$

corresponding to a change $\Delta E_0$ in the perceptual threshold $E_0$ of:

$$\Delta E_0 \rightarrow \Delta E_0 . Y_E^{(1/3)}$$

Consequently, the perceptual threshold $E_0$ is adapted to the coding according to the maximum lighting change multiplicative factor in post-processing. The information on the local luminosity of the quantized low-spatial frequency luminance component $\hat{L}_{lf}$ taking $Y_E = Y_{lf}/Y_n$ where the relationship between $Y_{lf}$ and $\hat{L}_{lf}$ is given by:

$$\widehat{L_{lf}}_{lf} = 116 \, Y_{lf}^{(1/3)} - 16.$$

In this way the perceptual space is localized since it is based on the low-spatial frequency luminance component $\hat{L}_{lf}$ associated with each prediction unit.

The localization of the perceptual space takes the following form in practice, in the embodiment that corresponds to the LabCIE76 perceptual space:

$$L_{local}^* = \frac{L_r}{\Delta E} = \frac{L_r}{\Delta E_0 (Y_E)^{1/3}} = \frac{L_r . 116}{\hat{L}_{lf} . \Delta E_0}$$

With respect to the color components a* and b*, no LDR localization is needed. The localization of the perceptual space involves the following transformation:

$$a_{local}^* = \frac{a^*}{\Delta E} = \frac{a^*}{\Delta E_0 (Y_E)^{1/3}} = \frac{a^* . 116}{\hat{L}_{lf} . \Delta E_0}$$

$$b_{local}^* = \frac{b^*}{\Delta E} = \frac{b^*}{\Delta E_0 (Y_E)^{1/3}} = \frac{b^* . 116}{\hat{L}_{lf} . \Delta E_0}$$

In step S106 each prediction unit is decomposed into one or more transform units (TU) by a further CU partitioning step. For example in the case of an intra coding unit, each transform unit of the coding unit is spatially predicted from neighbouring TUs which have been previously coded and reconstructed. The residual texture associated with a current TU is determined in step S107. The residual texture is then transformed in step S108 by transform unit T and quantized in step S109 by quantization unit Q for entropy coding by entropy encoder ENC2 in step S111. The coding parameters employed for the transform units may be determined by the ENCODER CONTROL module based on the rate-distortion calculation of embodiments of the invention. Encoding of the texture residual may be referred to herein as a second layer of coding.

The residual texture data to be coded in each prediction unit is thus represented in a local perceptual space $(L_{local}^*, a_{local}^*, b_{local}^*)$. If a rate-distortion cost was calculated on the basis of the local perceptual space, for the choice of quad tree representation of the CTUs of the HDR image to be encoded, an inconsistency would be likely to arise. For example, supposing that for a given CU at a given quad tree level the partitioning unit of the encoder has to choose between two types of prediction units 2Nx2N and NxN the comparison between the corresponding rate-distortion costs would be as follows:

$$D(CU_{level}, 2Nx2N) + \lambda R(CU_{level}, 2Nx2N) \lesseqgtr \sum_{i=1}^{4} D(PU_{level}^i, NxN) + \lambda R(PU_{level}^i, NxN)$$

i.e:

$$D(CU_{level}, 2Nx2N) + \lambda R(CU_{level}, 2Nx2N) \lesseqgtr \sum_{i=1}^{4} D(PU_{level}^i, NxN) + \lambda \sum_{i=1}^{4} R(PU_{level}^i, NxN)$$

In the term on the right it can be seen that an addition is performed on the calculated distortions for PUs represented in different colour spaces. This can lead to inconsistencies.

In order to address such a problem, in embodiments of the invention the rate-distortion cost associated with a spatial entity of the image is considered in the original HDR perceptual space rather than in the local LDR perceptual space. In this way rate-distortion costs corresponding to different image blocks of the image are comparable since they have been calculated in the same perceptual space. A step of reconstructing the coding unit in the HDR space is thus included in the encoding process of the embodiment of Figure 1. Reconstruction of a coding unit in the HDR space is carried out as follows.

Each TU of the coding unit is reconstructed by performing inverse quantization in step S112 inverse transformation in step S114 and prediction addition in step S116. The reconstructed TU is then obtained in the original HDR space in step S118.

For the step S118 of reconstructing the residual TU in the HDR space for which the local colour space in a particular embodiment of the invention is Lab 76, the following equations may be applied. The equations correspond respectively to the reconstruction of the decoded pixels of the TU in the HDR space for the luminance component L and the chrominance components a, b:

$$1. \quad L_l^{rec} = (Float)\left(\frac{L_{LDR}^{rec}}{LDRSCALING}\right)$$

$$2. \quad L_{HDR}^{rec} = L_l^{rec} . \frac{\Delta E_0 . \hat{L}_{lf}}{116} + \hat{L}_{lf}$$

$$3. \quad a_l^{rec} = (Float)\left(\frac{a_{LDR}^{rec}}{LDRSCALING}\right)$$

$$4. \quad a_{HDR}^{rec} = a_l^{rec} . \frac{\Delta E_0 . \hat{L}_{lf}}{116}$$

$$5. \quad b_l^{rec} = (Float)\left(\frac{b_{LDR}^{rec}}{LDRSCALING}\right)$$

$$6. \quad b_{HDR}^{rec} = b_l^{rec} . \frac{\Delta E_0 . \hat{L}_{lf}}{116}$$

where :

- *LDRSCALING* represents a constant integer for fixing the dynamic range of the given pixels at the input of the LDR coding layer;

- $L_l^{rec}, a_l^{rec}, b_l^{rec}$ represent the luminance and chrominance samples reconstructed in the local Lab space associated with the PU containing the sample;

- $L_{HDR}^{rec}, a_{HDR}^{rec}, b_{HDR}^{rec}$ represent the samples reconstructed in the HDR perceptual space of the original images $I_p$ to be compressed;

- $\hat{L}_{lf}$ represents the low spatial frequency luminance component associated with the PU, in the reconstructed version after inverse quantization.

A process for calculating the rate-distortion cost for encoding a coding unit with a set of encoding parameters p, according to one or more embodiments of the invention is set out as follows. In the embodiment of Figure 1 the rate distortion cost process is performed in step S120 by rate distortion module RATE-DIST.

The process is initialized by resetting the rate distortion cost J to 0 : $J \leftarrow 0$

After the low spatial frequency component $L_{lf}(PU)$ has been entropy encoded in step S110 an associated rate $R(L_{lf})$ is determined in step S120 for the entropy encoded low spatial frequency component $L_{lf}(PU)$. The rate-distortion cost J is then updated in accordance with:

$J \leftarrow J + \lambda.R(L_{lf})$ where $\lambda$ represents the Lagrange parameter.

An associated rate $R(TU,p)$ is determined in step S120 for the entropy encoded residual texture of step S111.

A distortion for the reconstructed TU in the original HDR perceptual space is then calculated as follows:

$$D^{HDR}(TU,p) = \sum_{i=1}^{n \times n} \left(TU_{rec}^{HDR}(i) - TU_{orig}^{HDR}(i)\right)^2,$$ where $TU_{orig}^{HDR}(i)$ corresponds to

the sample of the TU in the original HDR image and $TU_{rec}^{HDR}(i)$ corresponds to the sample of the reconstructed TU in the HDR perceptual space. The rate distortion cost J of the CU is then updated as follows:

$$J \leftarrow J + D^{HDR}(TU,p) + \lambda. R(TU,p)$$

The rate-distortion cost associated with the encoding of a CU with a coding parameter p can be formulated as follows:

$$D^{HDR}(CU,p) + \lambda\left(R_{LDR}(CU,p) + R(L_{lf},p)\right)$$

where :

- $R_{LDR}(Cu, p)$ is the coding cost of the considered CU in the LDR layer $R(L_{lf}, p)$ is the coding cost of the low frequency luminance components associated with the PUs belonging to the CU considered.

In step S122 the encoder control module ENCODER CONTROL adapts the coding parameters of the LDR encoding process based on the rate distortion cost calculated in step S122 for the encoded TU in the HDR perceptual space.

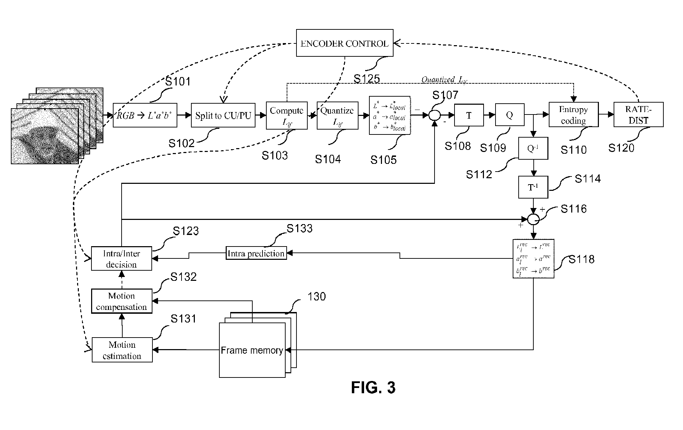

Figure 3 is a schematic block diagram illustrating an example of an encoding process in which the encoding steps of Figure 1 is incorporated. Additional modules are described as follows. Unit 130 represents a memory in which frames of the video are stored for inter frame encoding processes including motion estimation (step S131), motion compensation (step S132). Intra prediction on the reconstructed TU is performed in step S133.

As shown in Figure 3, the ENCODER CONTROL module" is in charge of deciding in step S123 the strategy used to encode a given coding unit in a current image.

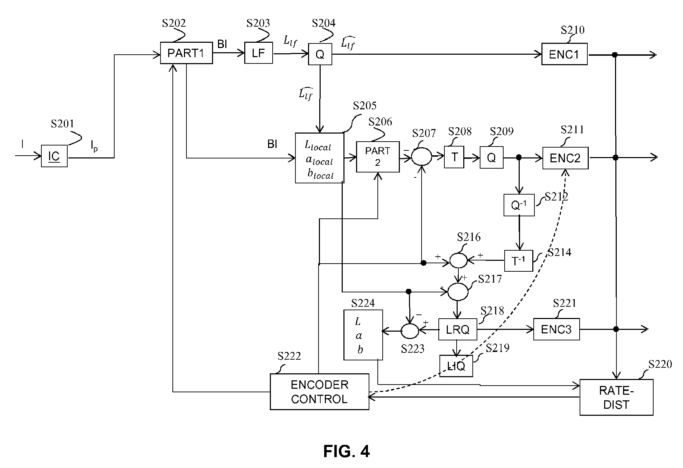

Figure 4 is a schematic block diagram illustrating steps of a method of encoding at least part of an image according to a further embodiment of the invention. With reference to Figure 4, steps S201 to S214 are similar to corresponding steps S101 to S114 of Figure 1. The process of the embodiment of Figure 4 differs to that of Figure 1 in that it includes a refinement step, typically referred to as quasi-lossless, in which refinement is performed on the texture data reconstructed in the local perceptual space of the PU being processed. The encoding may be referred to as tri-layer encoding since it involves entropy encoding of the low spatial frequency component $L_{lf}$, the entropy encoding of the residual textual data and $L_\infty$ norm entropy encoding. The additional refinement step in the encoding process ensures a distortion based on the $L_\infty$ norm between the original texture data and the texture data reconstructed in the considered local perceptual space (steps S216 to S224). Encoding module ENC3 performs encoding for this encoding layer in step S221.

In the case where layer $L_\infty$ is present, the encoder can operate according to two different modes of operation. In a first mode of operation only a quality of reconstruction in $L_\infty$ norm is sought. In such a case the image data is encoded at a minimum rate ensuring the quality in $L_\infty$ norm according to:

$$\begin{cases} min(R_{lf} + R_{LDR} + R_{L_\infty}) \\ s.t.\ D_\infty(CU^{rec}, CU^{orig}) \le D_\infty^{target} \end{cases}$$

where $D_\infty^{target}$ represents the targeted distortion (quality level) in $L_\infty$ norm and $R_{L_\infty}$ constitutes the number of bits used to code the current CU in the residual layer $L_\infty$. In this mode of operation the residual layer $L_\infty$ automatically corrects the distortion that may lie between the original pixel data and the reconstructed block, within the considered local perceptual space. The coding rate of encoding of the set of layers is reduced and thus the efficiency of compression is improved.

In the second mode of operation of the tri-layer encoding a compromise is sought between the quality of reconstruction in the LDR layer and the total rate of the three layers. The rate-distortion cost is formulated as follows:

$$min\left(D_2^{HDR}(CU^{rec}, CU^{orig}) + \lambda(R_{lf} + R_{LDR} + R_{L_\infty})\right)$$

Where $D_2^{HDR}(CU^{rec}, CU^{orig})$ corresponds to the quality of a CU decoded in the LDR layer and reconstructed in the HDR space of the original image. This quality is calculated in $L_2$ norm since the encoder of the LDR layer operates in $L_2$ norm. Moreover, $R_{L_\infty}$ corresponds to the rate of the refinement layer $L_\infty$ for the current CU.

The advantage of the latter mode of operation is that an intermediate LDR layer of good quality is reconstructed.

In each of the described embodiments an encoded bitstream representative of the original HDR image is transmitted to a destination receiving device equipped with a decoding device. Information on the adapted coding parameters used to encode the image data may be transmitted to the decoding device to enable the bitstream representing the HDR image to be decoded and the original HDR image reconstructed. The information representative of the adapted coding parameters may be encoded prior to transmission. For example, in the embodiments of Figure 1 and Figure 4 data representative of the adapted coding parameters is provided by the encoder control module and encoded in the bitstream by encoder ENC2. In these examples the parameters are thus encoded in the bitstream corresponding to the second layer of coding (LDR layer).

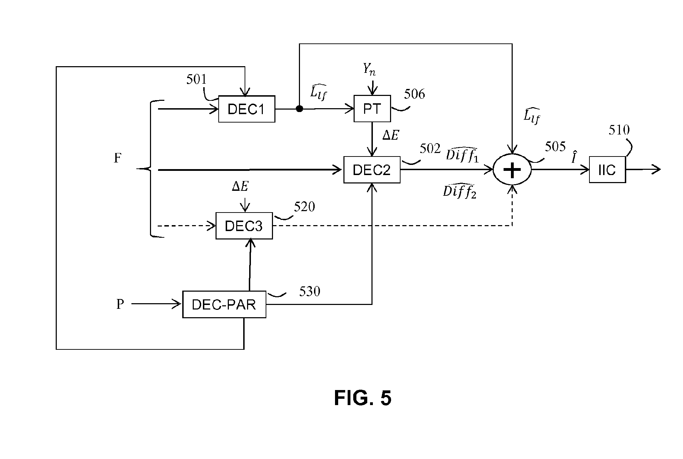

Figure 5 is a schematic block diagram illustrating an example of a decoding process implemented by a decoding device, in accordance with an embodiment of the invention for decoding a bitstream representing an image I. In the decoding process decoders DEC1, DEC2 and DEC3, are configured to decode data which have been encoded by the encoders ENC1, ENC2 and ENC3 respectively.

In the example the bitstream F which represents a HDR image I which comprising a luminance component and potentially at least one colour component. Indeed the component(s) of the image I belong to a perceptual colour space as described above.

In step 501, a decoded version $\hat{L}_{lf}$ of the low-spatial-frequency version of the luminance component of the image I is obtained by decoding at least partially the bitstream F, by means of a decoder DEC1.

In step 502, a decoded version of the encoded residual textual data is obtained by at least a partial decoding of the bitstream F by means of the decoder DEC2.

In step 505, the decoded version of residual textual data and the decoded version $\hat{L}_{lf}$ of the low-spatial-frequency version of the luminance component of the image are associated with each other to obtain a decoded image $\hat{I}$.

In some embodiments of the invention, in which the image data has been encoded in accordance with a tri-layer encoding process such as the process of Figure 4 a third layer of decoding is provided in which decoding is performed by decoder unit DEC3.

Data P representative of the adapted encoding parameters is received by the decoding device and decoded by a parameter decoder module DEC-PAR in step 530. The encoding parameter data P is transmitted in the bitstream with the image data I. The information on the encoding parameters employed is then provided to decoders DEC 1, DEC 2 and DEC 3 so that the encoded image data may be decoded with decoding parameters in accordance with the encoding parameters determined by encoder control module ENCODER CONTROL of the encoder.

The decoding precision of decoder DEC2 depends on a perceptual threshold $\Delta E$ that defines an upper bound of the metric, defined in the perceptual space, which insures a control of the visual losses in a displayed decoded version of the image. The precision of the decoding is thus a function of the perceptual threshold which changes locally.

As previously described, the perceptual threshold $\Delta E$ is determined, according to an embodiment, according to reference lighting conditions of the displaying (the same as those used for encoding) and the decoded version $\hat{L}_{lf}$ of the low-spatial-frequency version of the luminance component of the image I.

According to an embodiment each component of a residual image has been normalized by means of the perceptual threshold $\Delta E$, the residual image is decoded at a constant precision and each component of the decoded version of the differential image is re-normalized by the help the perceptual threshold $\Delta E$ where

$$\Delta E = \Delta E_0 . \frac{\widehat{L_{lf}}}{116}$$

According to an embodiment the re-normalization is the division by a value which is a function of the perceptual threshold $\Delta E$.

The encoders ENC1, ENC2 and/or ENC3 (and decoders DEC1, DEC2 and/or DEC3) are not limited to a specific encoder (decoder) but when an entropy encoder (decoder) is required, an entropy encoder such as a Huffmann coder, an arithmetic coder or a context adaptive coder like Cabac used in h264/AVC or HEVC is advantageous.

The encoder ENC2 (and decoder DEC2) is not limited to a specific encoder which may be, for example, a lossy image/video coder like JPEG, JPEG2000, MPEG2, h264/AVC or HEVC.

The encoder ENC3 (and decoder DEC3) is not limited to a specific lossless or quasi lossless encoder which may be, for example, an image coder like JPEG lossless, h264/AVC lossless, a trellis based encoder, or an adaptive DPCM like encoder.

According to a variant, in step 510, a module IIC is configured to apply an inverse perceptual transform to the decoded image $\hat{I}$, output of the step 505. For example, the estimate of the decoded image $\hat{I}$ is transformed to the well-known space (X, Y, Z).

When the perceptual space LabCIE1976 is selected, the inverse perceptual transform is given by:

$$X = X_n f^{-1}\left(\frac{1}{116}(L^* + 16) + \frac{1}{500}a^*\right)$$

$$Y = Y_n f^{-1}\big(1/116(L^* + 16)\big)$$

$$Z = Z_n f^{-1}\left(\frac{1}{116}(L^* + 16) + \frac{1}{200}b^*\right)$$

When the perceptual space Luv is selected, the inverse perceptual transform is given by:

$$X = \frac{9Yu'}{4v'}$$

$$Y = Y_n f^{-1}\left(\frac{1}{116}(L^* + 16)\right)$$

$$Z = \frac{3Y(4 - u')}{4v'} - 5Y$$

Potentially, the image in the space (X,Y,Z) is inverse transformed to get the estimate of the decoded image in the initial space such as (R,G,B) space.

In Figures 1, and 3 to 7, the modules are functional units, which may or may not correspond to distinguishable physical units. For example, a plurality of such modules may be associated in a unique component or circuit, or correspond to software functionalities. Moreover, a module may potentially be composed of separate physical entities.

Apparatus compatible with embodiments of the invention may be implemented either solely by hardware, solely by software or by a combination of hardware and software. In terms of hardware for example dedicated hardware, may be used, such ASIC or FPGA or VLSI, respectively « Application Specific Integrated Circuit », « Field-Programmable Gate Array », « Very Large Scale Integration », or by using several integrated electronic components embedded in a device or from a blend of hardware and software components.

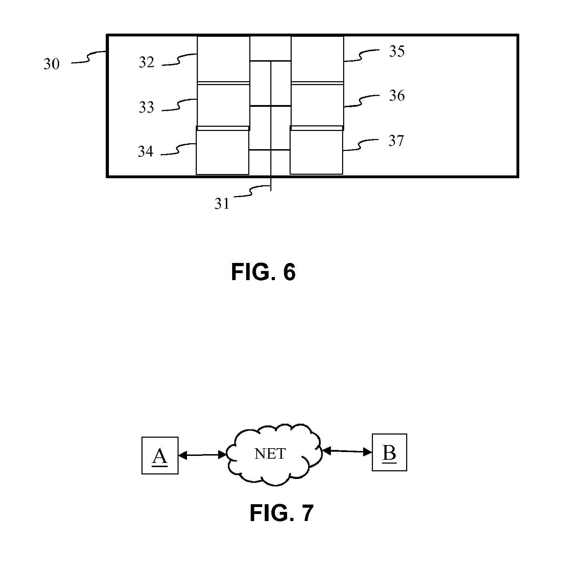

Figure 6 is a schematic block diagram representing an exemplary architecture of an encoding device or a decoding device 30 in which one or more embodiments of the invention may be implemented.

Device 30 comprises the following modules linked together by a data and address bus 31:

- a microprocessor 32 (or CPU), which is, for example, a DSP (or Digital Signal Processor);
- a ROM (or Read Only Memory) 33;
- a RAM (or Random Access Memory) 34;
- an I/O interface 35 for reception of data to be transmitted, from an application; and
- a battery 36

According to an alternative embodiment, the battery 36 may be external to the device. Each of these elements of Figure 6 are well-known by those skilled in the art and consequently need not be described in further detail for an understanding of the invention. A register may correspond to area of small capacity (some bits) or to very large area (e.g. a whole program or large amount of received or decoded data) of any of the memories of the device. ROM 33 comprises at least a program and parameters. Algorithms of the methods according to embodiments of the invention are stored in the ROM 33. When switched on, the CPU 32 uploads the program in the RAM and executes the corresponding instructions.

RAM 34 comprises, in a register, the program executed by the CPU 32 and uploaded after switch on of the device 30, input data in a register, intermediate data in different states of the method in a register, and other variables used for the execution of the method in a register.

According to an embodiment, the device of Figure 6 further comprises means for obtaining reference lighting conditions of the displaying such as a maximal environmental brightness value Y_n of the displaying lighting.

According to an embodiment, the device of Figure 6 comprises a display 37 and the means for obtaining reference lighting conditions of the display are configured to determine such reference lighting conditions of the display from some characteristics of the display 37 or from lighting conditions around the display 36 which are captured by the apparatus.

For instance, the means for obtaining a maximal environmental brightness value Y_n of the displaying lighting are a sensor attached to the display and which measures the environmental conditions. A photodiode or the like may be used to this purpose.

Figure 7 is an example of a communication system in which embodiments of the invention may be implemented. The communication system includes two remote device A and B communicating via a communication network NET. The communication network NET may be a wireless network, a wired network or a combination of wireless and wired communication links.

Device A comprises an encoder configured to implement a method for encoding a HDR image in accordance with any of the embodiments of the invention and the device B comprises a decoder configured to implement a method for decoding a bitstream representing a HDR image as described in relation to Figure 6. Device B may also comprise a display 37 for displaying the decoded HDR image.

The devices A and B are both configured to have access to information on the reference lighting conditions of the display such as a maximal environmental brightness value Y_n of the display lighting.

For example, the devices A and B store the same reference lighting conditions of the display such as a maximal environmental brightness value Y_n of the display lighting.

Alternatively, the device B is configured to obtain the reference lighting conditions of the displaying such as a maximal environmental brightness value Y_n of the display lighting and to send it to the device A. The device A is then configured to receive transmitted reference lighting conditions of the display such as a maximal brightness value Y_n of the displaying lighting.

Inversely, the device A is configured to obtain the reference lighting conditions of the display such as maximal environmental brightness value Y_n of the displaying lighting, for example from a storage memory, and to send it to the device B. The device B is then configured to receive such a transmitted reference lighting conditions of the displaying such a maximal environmental brightness environmental value Y_n of the displaying lighting.

Embodiments of the invention described herein may be implemented in, for example, a method or process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in an apparatus such as, for example, a processor. The term processor refers to processing devices in general, including, for example, a computer, a microprocessor, an integrated circuit, or a programmable logic device. Processors may also include communication devices, such as, for example, computers, tablets, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, the present description or claims may refer to "determining" various pieces of information. Determining the information may include one or more of, for example, estimating the information, calculating the information, predicting the information, or retrieving the information from memory.

Additionally, the present description or claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

Although the present invention has been described hereinabove with reference to specific embodiments, it will be appreciated that the present invention is not limited to the specific embodiments, and modifications will be apparent to a skilled person in the art which lie within the scope of the present invention.

For instance, while in the foregoing examples an encoding process based on a HEVC coding process has been described it will be appreciated that the invention is not limited to any specific encoding process. Other encoding processes applicable to the encoding of LDR images may be applied in the context of the invention. For example the encoding process and complementary decoding process may be based on other encoding/decoding methods involving some encoding strategy optimization step such as MPEG2, MPEG4, AVC, H.263 and the like.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

**Claims**

1. A method of encoding at least part of an image of high dynamic range defined in a perceptual space having a luminance component and a color difference metric, the method comprising:

   encoding (S102; S202, S107; S207, S116; S216) a segment of the at least part of the image using a encoding process applicable to a low dynamic range (LDR) image by applying a coding parameter set including at least one coding parameter;
   reconstructing (S118, S224) the encoded segment in the perceptual space of high dynamic range;
   evaluating (S120; S220) a rate distortion cost for the encoded segment in the perceptual space of high dynamic range; and
   adjusting (S122; S222) said coding parameter set for the encoding process of the segment based on the evaluated rate distortion cost.

2. A method according to claim 1, further comprising obtaining (S103, S203) for the said segment a least one common representative luminance component value based on the luminance values of the corresponding image samples of the said segment.

3. A method according to claim 2 wherein evaluating the rate distortion cost (S120) comprises evaluating the rate associated with encoding of the at least one common representative component value.

4. A method according to any preceding claim wherein the encoding process is a HEVC type encoding process and the segment of the at least part of the image corresponds to a coding unit, a prediction unit or a transform unit

5. A method according to any preceding claim further comprising representing the image segment in a local perceptual space (S105; S205) based on the common representative luminance component value prior to encoding of the segment.

6. A method according to claim 5 comprising obtaining for the segment at least one local residual luminance component in a local LDR domain, said at least one local residual luminance component corresponding to the differential between the corresponding luminance component of the original image and the at least one common representative luminance value of the segment.

7. A method according to claim 6 further comprising obtaining for the segment at least one image portion in the local perceptual space, said at least one image portion corresponding to the local residual luminance component or the color component of the image portion, normalized according to the at least one common representative luminance value of the segment.

8. A method according to claim 7 wherein evaluating the rate distortion cost (S120; S220) comprises evaluating the rate associated with encoding of the said at least one image portion.

9. A method according to any preceding claim wherein evaluating the rate distortion cost (S120; S220) comprises evaluating the distortion associated with reconstruction of the encoded segment in the perceptual space of high dynamic range.

10. A method according to any preceding claim wherein the rate distortion cost $D^{HDR}$ for a coding parameter set p is evaluated based on the following expression :

$$D^{HDR}(CU, p) + \lambda\big(R_{LDR}(CU, p) + R(L_{lf}, p)\big)$$

where :

   • $R_{LDR}(Cu, p)$ is the rate associated with encoding of the residual image portion; $R(L_{lf}, p)$ is the rate associated with encoding of the common representative luminance component value ;
   $D^{HDR}(CU, p)$ is the distortion associated with distortion associated with reconstruction of the encoded segment in the perceptual space of high dynamic range; and $\lambda$ is a Lagrange parameter

11. A method according to any preceding claim further comprising performing virtual lossless refinement (S218) between samples of the residual image portion reconstructed in the local perceptual space and samples of the original texture and the corresponding samples of the said image.

12. An encoding device for encoding at least part of an image of high dynamic range defined in a perceptual space having a luminance component and a color difference metric, the device comprising:

an encoder (ENC1, ENC2, ENC3) for encoding a segment of the at least part of the image using a encoding process applicable to a low dynamic range (LDR) image by applying a coding parameter set including at least one coding parameter;
a reconstruction module (REC) reconstructing the encoded segment in the perceptual space of high dynamic range;
a rate-distortion module (RATE-DIST) for determining a rate distortion cost for the encoded segment in the perceptual space of high dynamic range; and
an encoder management module (ENCODER CONTROL) for adjusting said coding parameter set for the encoding process of the segment based on the evaluated rate distortion cost.

13. A decoding method for decoding a bit-stream representative of at least part of an image of high dynamic range defined in a perceptual space having a luminance component and a color difference metric, the method comprising:

accessing coding data representative of a coding parameter set used to encode the image, the coding parameter set including at least one coding parameter
decoding a segment of the at least part of the image using a decoding process applicable to a low dynamic range (LDR) image by applying a decoding parameter set corresponding to the coding parameter set;
wherein the coding parameter set is previously determined based on a rate distortion cost evaluated for the segment after encoding of the segment by an encoding process applicable to an LDR image and reconstruction of the segment in the perceptual space of high dynamic range.

14. A decoding device for decoding a bit-stream representative of at least part of an image of high dynamic range defined in a perceptual space having a luminance component and a color difference metric, the device comprising:

an interface (530) for accessing coding data representative of a coding parameter set used to encode the image, the coding parameter set including at least one coding parameter
a decoder (501, 502; 520) for decoding a segment of the at least part of the image using a decoding process applicable to a low dynamic range (LDR) image by applying a decoding parameter set corresponding to the coding parameter set;
wherein the coding parameter set is previously determined based on a rate distortion cost evaluated for the segment after encoding of the segment by an encoding process applicable to an LDR image and reconstruction of the segment in the perceptual space of high dynamic range.

15. A computer program product for a programmable apparatus, the computer program product comprising a sequence of instructions for implementing a method according to any one of claims 1 to 11, or 13 when loaded into and executed by the programmable apparatus.

FIG. 1

CU

PU

2Nx2N  2NxN  Nx2N  NxN  2NxnU  2NxnD  nLx2N  nRx2N

Symmetric type          Asymmetric type

TU

TU size flag = 0    RQT 1 level

TU size flag = 1    RQT 2 level

TU

TU size flag = 0    

TU size flag = 1    RQT 3 level

**FIG. 2**

ENCODER CONTROL

S101

S125     *Quantized $L_{if}$*

$RGB \rightarrow L^*a^*b^*$   Split to CU/PU   Compute $L_{if}$   Quantize $L_{if}$   $L^* \rightarrow L^*_{local}$   $a^* \rightarrow a^*_{local}$   $b^* \rightarrow b^*_{local}$

S107

T   Q   Entropy coding   RATE-DIST

S102   S103   S104   S105   S108   S109   $Q^{-1}$   S110   S120

S112

$T^{-1}$   S114

S116

Intra/Inter decision   S123   S133   Intra prediction

$L^{rec}_i \rightarrow L^{rec}$
$a^{rec}_i \rightarrow a^{rec}$
$b^{rec}_i \rightarrow b^{rec}$   S118

Motion compensation   S132

130

Motion estimation   S131   Frame memory

**FIG. 3**

**FIG. 4**

**FIG. 5**

**FIG. 6**

**FIG. 7**

Europäisches
Patentamt

European
Patent Office

Office européen
des brevets

# EUROPEAN SEARCH REPORT

Application Number

EP 14 30 5042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/122426 A1 (DOLBY LAB LICENSING CORP [US]; TOURAPIS ALEXANDROS [US]) 13 September 2012 (2012-09-13) * paragraphs [0001] - [0018] * * paragraphs [0023] - [0026] * * paragraph [0032] * * paragraphs [0039] - [0047] * * figures 6,8 * | 1-15 | INV. H04N19/19 H04N19/30 H04N19/176 H04N19/147 H04N19/103 |
| X | Jens-Uwe Garbas ET AL: "Inter-Layer Prediction for Backwards Compatible High Dynamic Range Video Coding with SVC", PCS 2012, 7 May 2012 (2012-05-07), XP055035500, Retrieved from the Internet: URL:http://ieeexplore.ieee.org/ielx5/62090 60/6213248/06213348.pdf?tp=&arnumber=62133 48&isnumber=6213248 [retrieved on 2012-08-14] | 13-15 | |
| A | * abstract * * sections I-IV * | 1-12 | |
| X | MAI ZICONG ET AL: "Visually Favorable Tone-Mapping With High Compression Performance in Bit-Depth Scalable Video Coding", IEEE TRANSACTIONS ON MULTIMEDIA, vol. 15, no. 7, 1 November 2013 (2013-11-01), pages 1503-1518, XP011529386, ISSN: 1520-9210, DOI: 10.1109/TMM.2013.2266633 [retrieved on 2013-10-11] | 13-15 | TECHNICAL FIELDS SEARCHED (IPC) H04N |
| A | * abstract * * sections I and III * | 1-12 | |

-/--

The present search report has been drawn up for all claims

| Place of search | Date of completion of the search | Examiner |
|---|---|---|
| The Hague | 27 May 2014 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 14 30 5042

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ASHIKHMIN M: "A tone mapping algorithm for high contrast images", RENDERING TECHNIQUES 2002, EUROGRAPHICS WORKSHOP PROCEEDINGS, 26 June 2002 (2002-06-26), pages 145-155, XP002300402, ISBN: 978-1-58113-534-3 * abstract * * section 3 * | 1-15 | |
| A | US 2010/177203 A1 (LIN SHENG [US]) 15 July 2010 (2010-07-15) * paragraphs [0003] - [0026] * | 1-15 | |

TECHNICAL FIELDS
SEARCHED       (IPC)

The present search report has been drawn up for all claims

| Place of search | Date of completion of the search | Examiner |
|---|---|---|
| The Hague | 27 May 2014 | André, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                     EP 14 30 5042

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2014

| Patent document cited in search report | | Publication date | Patent family member(s) | Publication date |
|---|---|---|---|---|
| WO 2012122426 | A1 | 13-09-2012 | NONE | |
| US 2010177203 | A1 | 15-07-2010 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. E. RICHARDSON.** H.264 and MPEG-4 video compression. J. Wiley & Sons, September 2003

- **B. BROSS ; W.J. HAN ; G. J. SULLIVAN ; J.R. OHM ; T. WIEGAND.** High Efficiency Video Coding (HEVC) text specification draft 9. *JCTVC-K1003,* October 2012